(19) Europäisches Patentamt
European Patent Office
Office européen des brevets

(11) **EP 1 796 996 B1**

(12) **EUROPEAN PATENT SPECIFICATION**

(45) Date of publication and mention
of the grant of the patent:
**23.01.2013 Bulletin 2013/04**

(21) Application number: **04764293.9**

(22) Date of filing: **19.08.2004**

(51) Int Cl.:
**B66B 29/00** (2006.01)     **G01D 3/02** (2006.01)

(86) International application number:
**PCT/EP2004/009309**

(87) International publication number:
**WO 2006/018032 (23.02.2006 Gazette 2006/08)**

(54) **METHOD FOR TESTING THE POSITIONAL ADJUSTMENT OF A SENSOR FOR A PEOPLE CONVEYOR AND A SENSOR ARRANGEMENT THEREFOR**

VERFAHREN ZUM PRÜFEN DER POSITIONSEINSTELLUNG EINES SENSORS FÜR EINE PERSONENBEFÖRDERUNGSVORRICHTUNG UND EINE SENSORANORDNUNG DAFÜR

PROCEDE POUR TESTER LE REGLAGE DE LA POSITION D'UN CAPTEUR POUR UN DISPOSITIF DE TRANSPORT DE PERSONNES, ET SYSTEME DE DETECTION A CET EFFET

(84) Designated Contracting States:
**AT BE BG CH CY CZ DE DK EE ES FI FR GB GR HU IE IT LI LU MC NL PL PT RO SE SI SK TR**

(43) Date of publication of application:
**20.06.2007 Bulletin 2007/25**

(73) Proprietor: **Otis Elevator Company Farmington, CT 06032-2568 (US)**

(72) Inventors:
• **MUELLER, Markus**
  **13629 Berlin (DE)**
• **HORBRUEGGER, Herbert**
  **13589 Berlin (DE)**

• **STRIPLING, Ralph**
  **14089 Berlin (DE)**

(74) Representative: **Klunker . Schmitt-Nilson . Hirsch Patentanwälte Destouchesstrasse 68 80796 München (DE)**

(56) References cited:
**EP-A- 0 599 452     US-A1- 2003 168 311**

• **PATENT ABSTRACTS OF JAPAN vol. 2000, no. 16, 8 May 2001 (2001-05-08) -& JP 2001 002358 A (MITSUBISHI ELECTRIC BUILDING TECHNO SERVICE CO LTD), 9 January 2001 (2001-01-09)**

## Description

The present invention relates to testing of the positional adjustment of a sensor, such as a missing step sensor in a people conveyor. Particularly, the present invention relates to a method for testing the relative positional adjustment of a sensor which is adapted for sensing a target element which moves relative to the sensor preferably within a predetermined distance thereof, a corresponding sensor arrangement as well as a people conveyor including such a sensor arrangement.

A sensor arrangement according to the preamble of claim 8 is already known i.e. from US-A-2003 0168311.

Missing step detection in people conveyors having an endless conveyor band comprised of a plurality of tread elements, like escalators and moving walks, is conventional. Sensors of different types, like tactile contact sensors and noncontact sensors like, optical, magnetic, inductive, capacitive sensors, are used for this purpose. One such sensor is disclosed in WO 2004/033355 A1 with the title "Safety Monitoring System For A People Conveyor" in the name of the present applicant. In this particular document the people conveyor further includes a moving flange which moves together with the conveyor band when in use. The moving flange comprises a plurality of discs attached to the tread elements and a plurality of bridges each attached alternatingly between two consecutive discs. To each of the discs and bridges at least one marker is attached and the sensor is provided within a predetermined short distance of the moving path of such markers which are the target elements for the sensor. When a marker passes by a sensor, a sensor signal or sensor pulse is generated. The sensor is connected to an evaluation control. Once the evaluation control notices a lacking marker, the people conveyor is shut down and a "callback" signal is generated requiring the presence of maintenance personal for bringing the people conveyor back to service.

While this system is reliably shutting down the people conveyor in case of a missing step, bridge or disk, unnecessary shut-downs can occur, for example if a marker gets lost or in case of misalignment of a sensor with respect to the target elements. Unnecessary shutdowns and callbacks are cost expensive and annoying to the operators of people conveyors. Thus the industry is continuously searching for ways to eliminate such unnecessary shutdowns. WO 2004/033355 A1 suggest to provide at least two markers with each of the bridges and discs and to generate a shutdown signal only in case of detection of two subsequent missing signals. However, there still is the problem of unnecessary shutdowns due to misalignments of the sensor with respect to the target elements. Such misalignment can occur due to the sensor breaking loose or due to increasing clearances due to the normal wear in the system.

One way of reducing unnecessary shutdowns due to misalignment of the sensor with respect to the target elements is to physically inspect the alignment regularly, for example during maintenance, in order to become aware of a beginning misalignment at an early stage while the sensor is still generating signals of sufficient quality. This approach is, however, difficult to perform in cases where the sensors are not easily accessible, for example where there are under the conveyor belt as with WO 2004/033355 A1. In this latter case the tread elements need to be disassembled in order to allow for physical inspection of correct alignment.

Therefore it is the object of the present invention to provide a method which allows for testing the positional adjustment or positional alignment of the sensor with respect to the target elements without having access thereto.

In accordance with an embodiment of the present invention this object is achieved with a method for testing the positional adjustment of a sensor which is adapted for sensing a target element which moves relative to the sensor within a predetermined distance, having the following steps:

- reading a value representative for a sensor signal;
- comparing the sensor signal value with a sensor reference signal value; and
- providing information on the sensor adjustment quality based on such comparison.

The method can be performed for example by a technician during maintenance of the people conveyor. The technician can for example use an electronic service tool which is connected to the maintenance interface of the people conveyor. The respective sensor reference signal value(s) can be stored in the people conveyor or in the electronic service tool and the step of comparing and providing the information can either be performed within the people conveyor or in the service tool. It is also possible to automatically perform the test method within the people conveyor for example on a regular or continuous basis, i.e. for example once a day or once a week. The information of a beginning misalignment can be output by way of a warning signal at the installation site or can be transmitted by way of a remote elevator/escalator monitor to a remote monitoring center.

It is to be noted that this method can also be used for testing the positional adjustment of the sensor at the time of assembly of the system, i.e. the people conveyor, etc. so that in addition to measuring and adjusting the necessary dimensions between the sensor and the target elements correct adjustment or alignment can be confirmed by way of actually testing the adjustment on the basis of the sensor signal as produced. The method can also be used during any subsequent adjustment of the sensor subsequent to the original installation thereof, for example during maintenance, etc. Of particular advantage is, however, the possibility to test the positional adjustment of the sensor with respect to the target elements in use without the need of disassembling parts of the respective system in which the sensor is used.

The sensor reference signal value can either be derived theoretically, for example, on the basis of the specific switch on/switch off behavior of the used sensor in combination with the passage time of the target element with respect to the sensor, i.e. the time required by the sensor elements to pass the sensor completely. Alternatively, the sensor reference signal value can also be an actual measured value which is measured for example subsequent to the original correct installation and positional adjustment of the sensor with respect to the target elements.

Preferably, the sensor signal value comprises at least one of the following values: signal duration, signal intensity, and signal shape. The signal value can also comprise a combination of specific signal values. In this context the signal refers to the individual pulse as generated by the sensor in the course of the passage of a target element. In the embodiment of a people conveyor having target elements attached to the tread elements, the bridges and/or the disks the subsequent passages of target elements along the sensor generate a signal train comprising a plurality of individual signals or pulses. Lacking signals or pulses are an indication for a missing tread, disk or bridge. In the particular application of the present method with people conveyor the signal duration is preferred, as signal duration is a value which can easily be calculated on the basis of the passage time of the target element by the sensor, and the switch on/switch off characteristics of the sensor. Therefore it is possible to calculate the sensor reference signal value in dependency of the speed of the target element. In people conveyors such speed value is frequently available, as it is needed for other purposes.

Therefore the sensor reference signal value preferably comprises at least one of the following values: signal duration, signal intensity, and signal shape. A combination of different values can also be used.

The present invention also relates in one embodiment to a method for testing the positional adjustment of a sensor within a people conveyor, which is adapted for sensing a target element which moves relative to the sensor within a predetermined distance thereof and which comprises the steps as described above.

Preferably, the step of comparing the sensor signal value with the sensor reference signal value includes the step of comparing the sensor signal value with at least two but preferably three sensor signal value ranges and of providing in the latter case of three ranges any of a "proper orientation"-information, and "adjustment required"-information and a "no function"-information, respectively, dependent on the sensor reference value range which corresponds to the actual sensor signal value.

The present invention further relates in another embodiment to a sensor arrangement including a sensor which is adapted for sensing a target element which moves relative to the sensor preferably within a predetermined distance, comprising an evaluation control having a memory for storing a sensor reference signal value, and a comparator for comparing a value representative for a sensor signal with a sensor reference signal value and an output for providing information on the sensor adjustment quality base on such comparison.

The present invention preferably relates to a people conveyor including a sensor arrangement according to the present invention. Particularly, the people conveyor includes an endless conveyor band comprising a plurality of tread elements wherein tread elements comprise the target elements.

Preferably, the people conveyor further includes a moving flange moving in use together with the conveyor band, the moving flange comprising a plurality of disks attached to the tread elements and the plurality of bridges, each attached alternating between two consecutive disks where in the disks and bridges comprise the target elements.

Preferably, the evaluation control is part of the conveyor control.

The present invention can be used in people conveyors of the escalator and moving walk type and also in elevators, for example for testing the adjustment quality of level sensors which are used for identifying the position with respect to the floor level, etc., as well as other types of sensors for application outside the people conveyor field.

The invention and embodiments of the invention are described in greater detail below with reference to the Figures, wherein

    Fig. 1 shows part of a people conveyor for use with the present invention with parts thereof broken away for clarity;

    Fig. 2 shows a detail of the people conveyor of Fig. 1;

    Fig. 3 is a schematic representation of the positional arrangement of the sensor with respect to target elements; and

    Fig. 4 is a plot of the sensor on/off characteristic with respect to the lateral distance of the sensor to the target and showing the dependency of the signal length from the lateral distance.

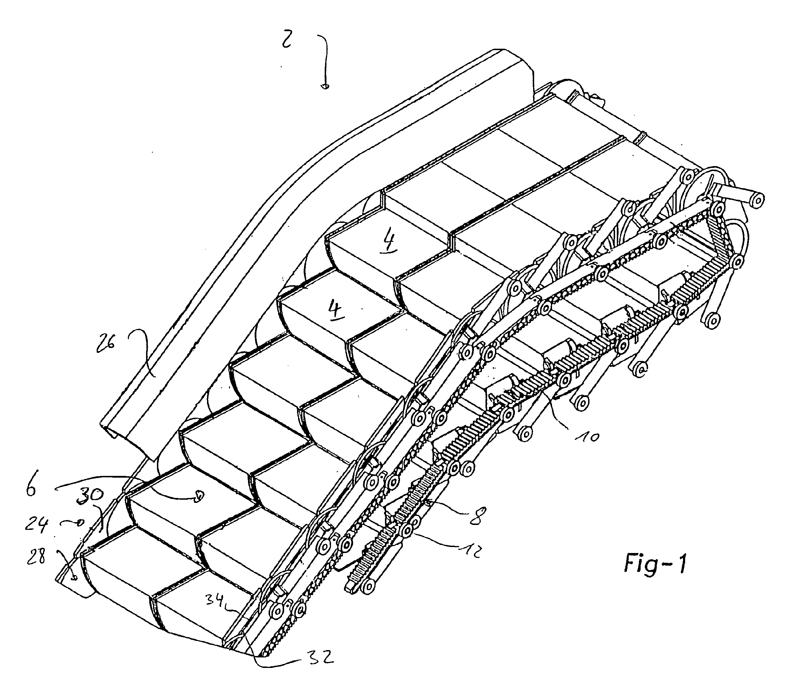

Fig. 1 shows a people conveyor and particularly an escalator 2 including an endless step belt 6 which is formed from a plurality of subsequent tread elements 4. The tread elements 4 are connected to lateral drive chains 8. The drive chain 8 is formed of a plurality of chain links 10. The chain links 10 are connected with each other at joints 12. Instead of the chain links 10 with integrated teeth as shown in Fig. 1 conventional chain links can be used. The tread band 6 or conveyor band 6 is driven by a linear drive (not shown) or a conventional chain sprocket drive (not shown).

The passenger conveyor 2 comprises a moving flange 24 and an inner decking 26 which provides an upper cover for the moving flange 24. The moving flange 24 is formed of a plurality of disks 28 attached to the tread elements 4 and a plurality of bridges 30 which are positioned between each two consecutive disks 24. The disks 28 and bridges 30 are slidably attached with each other.

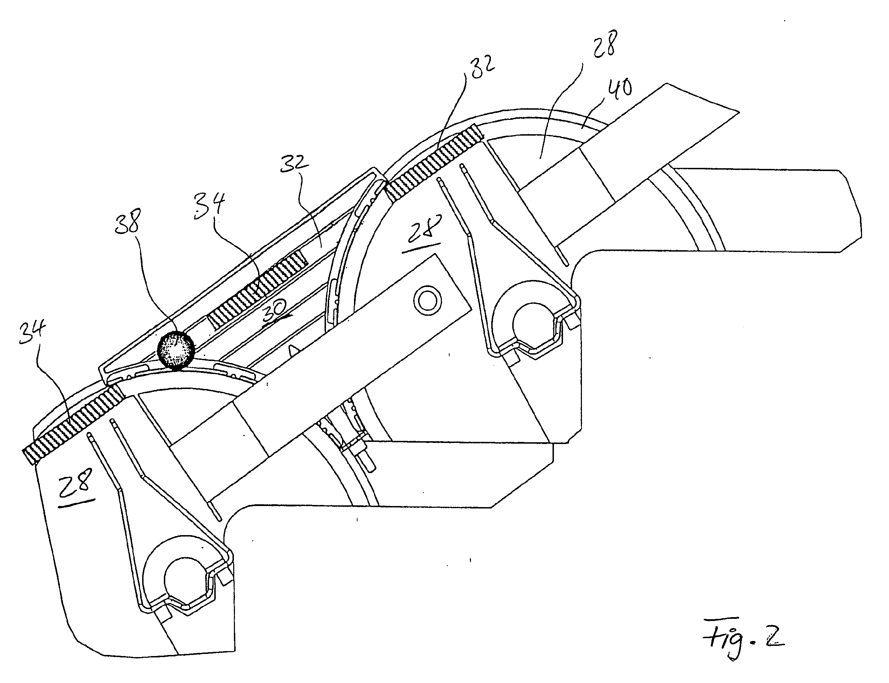

As can be seen in more detail in Fig. 2, attached to the disks 28 and bridges 30 are target elements or markers 34. The target elements 34 can be snap-on elements which are attached to ribs 32 which are provided on the disks 28 and bridges 30, respectively. In Fig. 2 a sensor 38 is shown. The sensor 38 is preferably of the contactless type, i.e. it can be an inductive sensor, a capacitive sensor, an optical sensor, etc.

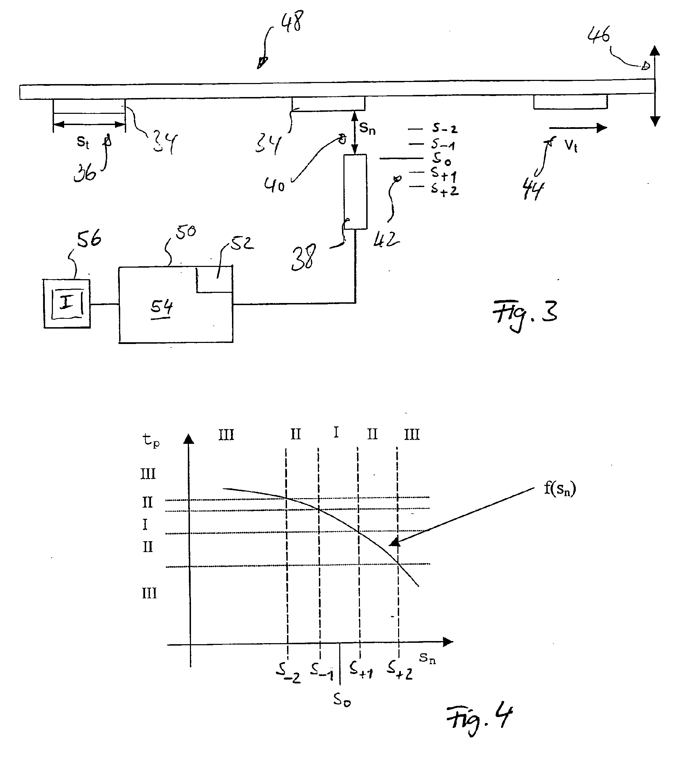

The arrangement of sensor 38 and target elements 34 is schematically shown in Fig. 3. Arrow 40 represents the distance $S_n$ between sensor 38 and target element 34. Arrow 36 represents the length $S_t$ of the target element 34.

Scale 42 represents particular distance values $S_0$, $S_{+1}$, $S_{-1}$, $S_{+2}$, $S_{-2}$. So represents the "factory adjustment", i.e. the optimum design distance between sensor 38 and target element 34. Arrow 44 represents the relative velocity $V_t$ between sensor 38 and target elements 34, while arrow 46 represents the lateral movement of the target elements 34 with respect to the sensor 38. The cause for such lateral movement can be intrinsic to the particular application, i.e. it can be the lateral movement of the step band to which the target elements 34 are attached with respect to the sensor 38 which typically attached to the truss (not shown) of the people conveyor 2. The lateral movement can vary due to wear in the particular system wherein the sensor arrangement which is generally denoted with 48 is used. With an escalator, for example such lateral movement of the step band slightly increases due to wear.

Also due to wear or due to an impact on the sensor 38 or any target element 34 the distance $S_n$ can change. Obviously, the distance can permanently change to become smaller or larger as compared to the original distance. The distance can also dynamically change so that in the course of the movement of the target elements 34 relative to the sensor, distance variation for example around So occur, which have an effect on the signal as procured by the sensor 38. Finally, this can result in bad sensor signals which can no longer be properly evaluated, or processed. The sensor arrangement 48 of Fig. 3 further comprises an evaluation control 50 having a memory 52 for storing a sensor reference signal value and a comparator 54 for comparing a value representative for a sensor signal with the sensor reference signal value and an output 56 in the form of a display for providing information on the sensor adjustment quality based on the comparison. The sensor reference signal value can either be calculated on the basis of predetermined data but can also be obtained by way of measuring reference data for example immediately after "factory adjustment" has been performed.

With respect to the example of Fig. 3, the time required by the target element 34 for passing the sensor 38 completely is dependent on the velocity $V_t$ of the target element 34:

$$t = S_t/V_t$$

The resulting pulse duration for pulse width $t_P$ of the dynamic sensor signal or pulse is also dependent of the specific switch on/switch off behavior of the sensor 38 as used. Frequently and particularly with an inductive sensor 38 this behavior depends on the distance $S_n$ and function $f(S_n)$ as shown in Fig. 4. Function $f(S)$ is the sensor on/sensor off characteristic in dependency of the distance $S_n$ between sensor 38 and target element 34. Consequently the pulse duration or signal duration has the following value:

$$t_P = f(S_n) * S_t/V_t$$

The representation of Fig. 4 details the correspondence between the signal duration $t_p$ and the lateral distance $S_n$ between sensor 38 and target element 34. Similar relationships can also apply for signal intensity as well as signal shape on the one hand as well as other misadjustment or misalignments between the sensor 38 and the target element 34, for example hight or level differences between sensor and target element 34 or angular misadjustments. On the basis of such variations of the sensor signal value, the respective misadjustment ranges can be determined which correspond to proper operation or which require adjustment. It is also possible to define a further range where the sensor arrangement 48 is out of function or not functioning. In the present embodiment range I, which is defined between the distances $S_{-1}$ and $S_{+1}$ corresponds to proper operation. Range II, which is defined outside range I and between $S_{-2}$ and $S_{+2}$ corresponds to "adjustment required". Range III, which is outside range II corresponds to sensor arrangement 48 not functioning. Such range values, or in the particular embodiment distance values can be stored in memory 52 and /or can be used by the comparator 54. Particular range values are stored in memory 52 and/or are compared with actual sensor values, the respective sensor reference signal values will typically be dependent on the speed of the target element 34. In this case it will be necessary to make sure that the target elements 34 move relative to the sensor 38 with the correct velocity, while a test of positional adjustment is conducted. This might not be necessary if the sensor reference signal values are calculated based on the velocity. The range values can then be calculated for example based on the particular percentage of signal duration, signal intensity, etc. at factory adjustment.

Instead of the display output 56 as shown in Fig. 3, any other output is possible. For example a simple warning light in case that an adjustment is required or a direct connection to the respective control for example of the people conveyor 2 in order to stop it when the sensor arrangement 48 is not functioning. The evaluation control 50 does not necessarily have to be an integral part of the sensor arrangement 48. It is also possible to have a separate service tool incorporating the evaluation control 50 or part of it. The technician can then connect the service tool with a service interface in order to perform the test. While with respect to the conveyor applications it normally is sufficient to test the positional adjustment of the sensor 38 with respect to the target element 34 only from time to time, for example in the course of maintenance of the people conveyor 2, it can also be advantageous to frequently perform such testing and use the respective test result in order to obtain information on the deviation overtime and to get market feedback on the alignment quality over years of for example step band and sensor. A respective memory for data logging of the raw signal and/or evaluated signal in the evaluation control 50 or elsewhere can be provided.

**Claims**

1. Method for testing the relative positional adjustment of a sensor (38) which is adapted for sensing a target element (34) which moves relative to the sensor (38), having the following steps:

    - reading a value representative for a sensor signal;
    - comparing the sensor signal value with a sensor reference signal value; and
    - providing information on the sensor adjustment quality based on such comparison.

2. Method according to claim 1, wherein the sensor signal value comprises at least one of signal duration ($t_P$), signal intensity, and signal shape.

3. Method according to claim 1 or 2, wherein the sensor reference signal value comprises at least one of signal duration ($t_P$), signal intensity, and signal shape.

4. Method according to any of claims 1 to 3, wherein the sensor (38) is within a people conveyor (2).

5. Method according to claim 4, wherein the sensor (38) is connected with the control (50) of the people conveyor (2) and the control (50) comprises a memory (52) for storing the sensor reference signal value.

6. Method according to claim 4 or 5, wherein there is a plurality of target elements (34) and wherein tread elements (4) in the people conveyor (2) comprise the plurality of target elements (34).

7. Method according to any of claims 1 to 6, wherein the step of comparing the sensor signal value with the sensor reference signal value includes the step of comparing the sensor signal value with at least two sensor reference value ranges (I, II, III) and the step of providing information includes providing predefined adjustment state information, dependent on the sensor reference value range (I, II, III) which corresponds to the sensor signal value.

8. Sensor arrangement (48) including a sensor (38) which is adapted for sensing a target element (34) which moves relative to the sensor (38) comprising an evaluation control (50) having a memory (52) for storing a sensor reference signal value and a comparator (54) for comparing a value representative for a sensor signal with the sensor reference signal value, **characterized in that** said sensor arrangement (48) further comprises an output (56) for providing information on the sensor relative positional adjustment quality based on such comparison.

9. Sensor arrangement (48) according to claim 8, wherein the memory (52) is adapted for storing at least two sensor reference value ranges (I, II, III), the comparator (54) is adapted for comparing the sensor signal value with the at least two sensor reference value ranges (I, II, III), and the output (56) is adapted for providing predefined adjustment state information dependent on the sensor reference value range (I, II, III) which corresponds to the sensor signal value.

10. People conveyor (2) including a sensor arrangement (48) according to claim 8 or 9.

11. People conveyor (2) according to claim 10, including an endless conveyor band (6) comprising a plurality of tread elements (4) wherein tread elements (4) comprise the target elements (34).

12. People conveyor (2) according to claim 11, further including a moving flange (24) moving in use together with the conveyor band (6), wherein the flange (24) comprises the target elements (34).

13. People conveyor (2) according to any of claims 10 to 12, wherein the evaluation control (50) is part of the people conveyor control.

**Patentansprüche**

1. Verfahren zum Testen der relativen positionismäßigen Einstellung eines Sensors (38), der zum Erfassen eines Zielelements (34) ausgebildet ist, das sich relativ zu dem Sensor (38) bewegt, wobei das Verfahren folgende Schritte aufweist:

- Lesen eines Werts, der für ein Sensorsignal repräsentativ ist;
- Vergleichen des Sensorsignal-Werts mit einem Sensorreferenzsignal-Wert; und
- Bereitstellen von Information über die Sensoreinstellungsqualität auf der Basis dieses Vergleichs.

2. Verfahren nach Anspruch 1,
wobei der Sensorsignal-Wert mindestens eines von einer Signaldauer ($t_P$), einer Signalstärke und einer Signalform beinhaltet.

3. Verfahren nach Anspruch 1 oder 2,
wobei der Sensorreferenzsignal-Wert mindestens eines von einer Signaldauer($t_P$), einer Signalstärke und einer Signalform beinhaltet.

4. Verfahren nach einem der Ansprüche 1 bis 3,
wobei der Sensor (38) in einem Personenbeförderer (2) vorgesehen wird.

5. Verfahren nach Anspruch 4,
wobei der Sensor (38) mit der Steuerung (50) des Personenbeförderers (2) verbunden wird und die Steuerung (50) einen Speicher (52) zum Speichern des Sensorreferenzsignal-Werts aufweist.

6. Verfahren nach Anspruch 4 oder 5,
wobei eine Mehrzahl von Zielelementen (34) vorhanden ist und wobei Trittelemente (4) in dem Personenbeförderer (2) die Mehrzahl von Zielelementen (34) aufweisen.

7. Verfahren nach einem der Ansprüche 1 bis 6,
wobei der Schritt des Vergleichens des Sensorsignal-Werts mit dem Sensorreferenzsignal-Wert den Schritt des Vergleichens des Sensorsignal-Werts mit mindestens zwei Sensorreferenzwert-Bereichen (I, II, III) beinhaltet und der Schritt des Bereitstellens von Information das Bereitstellen von vordefinierter Einstellzustandsinformation in Abhängigkeit von dem dem Sensorsignal-Wert entsprechenden Sensorreferenzwert-Bereich (I, II, III) beinhaltet.

8. Sensoranordnung (48) mit einem Sensor (38), der dazu ausgebildet ist, ein Zielelement (34) zu erfassen, das sich relativ zu dem Sensor (38) bewegt, mit einer Auswertesteuerung (50), die einen Speicher (52) zum Speichern eines Sensorreferenzsignal-Werts und einen Komparator (54) zum Vergleichen eines für ein Sensorsignal repräsentativen Werts mit dem Sensorreferenzsignal-Wert aufweist, **dadurch gekennzeichnet, dass** die Sensoranordnung (48) ferner einen Ausgang (56) zum Bereitstellen von Information über die relative positionsmäßige Sensoreinstellungsqualität auf der Basis dieses Vergleichs aufweist.

9. Sensoranordnung (48) nach Anspruch 8,
wobei der Speicher (52) dazu ausgebildet ist, mindestens zwei Sensorreferenzwert-Bereiche (I, II, III) zu speichern, wobei der Komparator (54) dazu ausgebildet ist, den Sensorsignal-Wert mit den mindestens zwei Sensorreferenzwert-Bereichen (I, II, III) zu vergleichen, und wobei der Ausgang (56) dazu ausgebildet ist, vordefinierte Einstellzustandsinformation in Abhängigkeit von dem dem Sensorsignal-Wert entsprechenden Sensorreferenzwert-Bereich (I, II, III) bereitzustellen.

10. Personenbeförderer (2) mit einer Sensoranordnung (48) nach Anspruch 8 oder 9.

11. Personenbeförderer (2) nach Anspruch 10,
mit einem endlosen Förderband (6), das eine Mehrzahl von Trittelementen (4) aufweist, wobei die Trittelemente (4) die Zielelemente (34) aufweisen.

12. Personenbeförderer (2) nach Anspruch 11,
weiterhin mit einem bewegbaren Flansch (24), der sich im Gebrauch zusammen mit dem Förderband (6) bewegt, wobei der Flansch (24) die Zielelemente (34) aufweist.

13. Personenbeförderer (2) nach einem der Ansprüche 10 bis 12,
wobei die Auswertesteuerung (50) Teil der Steuerung des Personenbeförderers ist.

**Revendications**

1. Procédé pour tester le réglage de la position relative d'un capteur (38) qui est adapté pour détecter un élément cible (34) qui se déplace par rapport au capteur (38), comprenant les étapes suivantes consistant à :

- lire une valeur représentative pour un signal de capteur ;
- comparer la valeur de signal de capteur avec une valeur de signal de référence de capteur ; et
- fournir une information sur la qualité de réglage du capteur sur la base de cette comparaison.

2. Procédé selon la revendication 1, dans lequel la valeur de signal de capteur comprend au moins l'un des paramètres suivants, à savoir une durée du signal ($t_P$), une intensité du signal, et une forme du signal.

**3.** Procédé selon la revendication 1 ou la revendication 2, dans lequel la valeur de signal de référence de capteur comprend au moins l'un des paramètres suivants, à savoir une durée du signal ($t_P$), une intensité du signal, et une forme du signal.

**4.** Procédé selon l'une quelconque des revendications 1 à 3, dans lequel le capteur (38) est placé dans un dispositif de transport de personnes (2).

**5.** Procédé selon la revendication 4, dans lequel le capteur (38) est raccordé à la commande (50) du dispositif de transport de personnes (2) et la commande (50) comprend une mémoire (52) pour stocker la valeur de signal de référence de capteur.

**6.** Procédé selon la revendication 4 ou la revendication 5, dans lequel il y a une pluralité d'éléments cible (34) et dans lequel des éléments formant bande de roulement (4) dans le dispositif de transport de personnes (2) comprennent la pluralité d'éléments cible (34).

**7.** Procédé selon l'une quelconque des revendications 1 à 6, dans lequel l'étape de comparaison de la valeur de signal de capteur et de la valeur de signal de référence de capteur inclut l'étape consistant à comparer la valeur de signal de capteur avec au moins deux plages de valeurs de référence de capteur (I, II, III) et l'étape consistant à fournir une information inclut la fourniture d'une information d'état de réglage prédéfini, qui est fonction de la plage de valeurs de référence de capteur (I, II, III) qui correspond à la valeur de signal de capteur.

**8.** Agencement de capteur (48) incluant un capteur (38) qui est adapté pour détecter un élément cible (34) qui se déplace par rapport au capteur (38), comprenant une commande d'évaluation (50) ayant une mémoire (52) pour stocker une valeur de signal de référence de capteur et un comparateur (54) pour comparer une valeur représentative d'un signal de capteur avec la valeur de signal de référence de capteur, **caractérisé en ce que** ledit agencement de capteur (48) comprend en outre une sortie (56) pour fournir une information sur la qualité de réglage de la position relative du capteur sur la base de cette comparaison.

**9.** Agencement de capteur (48) selon la revendication 8, dans lequel la mémoire (52) est adaptée pour stocker au moins deux plages de valeurs de référence de capteur (I, II, III), le comparateur (54) est adapté pour comparer la valeur de signal de capteur avec lesdites au moins deux plages de valeurs de référence de capteur (I, II, III), et la sortie (56) est adaptée pour fournir une information d'état de réglage prédéfini, qui est fonction de la plage de valeurs de référence de capteur (I, II, III) qui correspond à la valeur de signal de capteur.

**10.** Dispositif de transport de personnes (2) incluant un agencement de capteur (48) selon la revendication 8 ou la revendication 9.

**11.** Dispositif de transport de personnes (2) selon la revendication 10, incluant une bande transporteuse continue (6) comprenant une pluralité d'éléments formant bande de roulement (4), dans lequel les éléments formant bande de roulement (4) comprennent les éléments cible (34).

**12.** Dispositif de transport de personnes (2) selon la revendication 11, incluant en outre une bride mobile (24) se déplaçant pendant l'utilisation avec la bande transporteuse (6), dans lequel la bride (24) comprend les éléments cible (34).

**13.** Dispositif de transport de personnes (2) selon l'une quelconque des revendications 10 à 12, dans lequel la commande d'évaluation (50) fait partie de la commande du moyen de transport de personnes.

Fig-1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20030168311 A

- WO 2004033355 A1